# EUROPEAN PATENT APPLICATION

(11) **EP 4 283 178 A1**
(43) Date of publication of application: **29.11.2023**
(21) Application number: 22206478.4
(22) Date of filing: 09.11.2022
(51) Int. Cl.: F16M 13/02, F16M 11/10, F16M 11/22

(54) **MULTI-ANGLE ADJUSTABLE ROTATION DEVICE**

(30) Priority: 25.05.2022 TW 111205470 U
(71) Applicant: Flytech Technology Co., Ltd., Taipei City 11494 (TW)
(72) Inventor: LU, Ping Wei, 11494 Taipei City (TW)
(74) Representative: Patentship Patentanwaltsgesellschaft mbH

(57) **Abstract**

The present invention relates to a multi-angle adjustable rotation device. The device includes a stationary member including a protrusion and a shaft hole; and a rotatable member including a plurality of recessions providing for the protrusion to selectively engage and a shaft configured to insert into the shaft hole, wherein the rotatable member is rotatably joined with the stationary member via the shaft and the shaft hole, rotates around the shaft as a rotation center relative to the stationary member, and is adjustably retained on different rotation angles by an engagement of the protrusion with respect to one of the plurality of recessions.

## Description

### CROSS-REFERENCE TO RELATED APPLICATION

This application claims priority benefit to Taiwan Utility Model Patent Application Serial No. 111205470, filed on May 25, 2022, in Taiwan Intellectual Property Office, the entire disclosures of which are incorporated by reference herein.

### FIELD

The present invention relates to a multi-angle adjustable rotation device, in particular to a multi-angle adjustable rotation device capable of retaining and positioning on different rotating angle through manual operations.

### BACKGROUND

In the state of the art, a rotating structure is a commonly seen, freqenctly used and extenstively applied mechanical linkage and rotation mechanism and is used to change the operating orientations or adjust the operating angles for an electronic product. The rotating structure is capable of linking an electronic product to a specific mounting spot and securing it to the spot. After the electronic product is fixed on the rotating structure, the rotating structure provides a rotating function for the electronic product to change and adjust its own operating directions and angles according to a user's wills and demands.

Such a mechanical linkage and rotation mechanism is roughly classified into two major categories. The first category is the active-type rotating mechanism, which contains an active power unit, such as, a motor and a driving motor to perform the rotation for an electronic product. The active power unit is in cooperation with and drives mechanical components, such as, driving gears, gear racks or screws, to achieve the purpose of adjusting an operating angle in use for an electronic product. However, this type category of mechanism has a couple of deficiencies. The active power unit is slightly vulnerable and easy to be damaged due to an improper adjustment, such as, an external forcible turning for the electronic device from a user. Furthermore, environmental factors like humidity and temperature variation are easy to cause the electric circuit and chips inside the mechanism failed. Moreover, the mechanism is hardly to be miniaturized, since it has to accommodate many electric components inside, such as, control chips, power management modules, restraint switches, etc., resulting in a larger overall size.

The second one is the passive-type rotating mechanism, which consists of mechanical components without any active unit including a rotating shaft, a rotary joint, and a ball head collaborating with a knob. It provides for a user to operate manually to change the operating direction and angle for an electronic product. Although it has no deficiencies as described above existing in the first category and has relatively lower manufacturing cost, the issue is that one must release and tighten up the screw knob repeatedly every time for each adjustment. As a result, it is unsuitable for applying in scenarios requiring frequent adjustments to change the operating directions and angles. Also, by using it, a user is kind of difficult to anticipate the determined operating direction and angle for the electronic product after each adjustment. In addition, this type category of mechanism usually has an outer appearance that is quite disorder and irregular and lack of aesthetics.

Hence, there is a need to solve the above deficiencies/issues.

### SUMMARY

The present invention relates to a multi-angle adjustable rotation device, in particular to a multi-angle adjustable rotation device capable of retaining and positioning on different rotating angle through manual operations.

The present invention provides a multi-angle adjustable rotation device. The device includes a stationary member including a protrusion and a shaft hole; and a rotatable member including a plurality of recessions providing for the protrusion to selectively engage and a shaft configured to insert into the shaft hole, wherein the rotatable member is rotatably joined with the stationary member via the shaft and the shaft hole, rotates around the shaft as a rotation center relative to the stationary member, and is adjustably retained on different rotation angles by an engagement of the protrusion with respect to one of the plurality of recessions.

The present invention further provides a multi-angle adjustable rotation device. The device includes a stationary member including a friction portion and a shaft hole; and a rotatable member including a friction surface corresponding to the friction portion and a shaft configured to insert into the shaft hole, wherein the rotatable member is rotatably joined with the stationary member via the shaft and the shaft hole, rotates around the shaft as a rotation center relative to the stationary member, and is adjustably retained on different rotation angles by a friction grip between the friction portion and the friction surface.

The above content described in the summary is intended to provide a simplified summary for the presently disclosed invention, so that readers are able to have an initial and basic understanding to the presently disclosed invention. The above content is not aimed to reveal or disclose a comprehensive and detailed description for the present invention, and is never intended to indicate essential elements in various embodiments in the present invention, or define the scope or coverage in the present invention.

### DESCRIPTION OF THE DRAWINGS

A more complete appreciation of the invention and many of the attendant advantages thereof are readily obtained as the same become better understood by reference to the following detailed description when considered in connection with the accompanying drawing, wherein:
FIG. 1 is a structural exploded view illustrating the first embodiment for the multi-angle adjustable rotation device according to the present invention;
FIG. 2 is a schematic diagram illustrating the detailed exemplary structure for the stationary member included in the first embodiment for the multi-angle adjustable rotation device according to the present invention;
FIG. 3 is a schematic diagram illustrating the detailed exemplary structure for the rotatable member included in the first embodiment for the multi-angle adjustable rotation device according to the present invention;
FIG. 4 is a structural side view illustrating the first embodiment for the multi-angle adjustable rotation device according to the present invention;
FIG. 5 is a schematic diagram illustrating the detailed exemplary structure for the stationary member included in the second embodiment for the multi-angle adjustable rotation device according to the present invention; and
FIG. 6 is a schematic diagram illustrating the detailed exemplary structure for the rotatable member included in the second embodiment for the multi-angle adjustable rotation device according to the present invention.

### DETAILED DESCRIPTION

The present disclosure will be described with respect to particular embodiments and with reference to certain drawings, but the disclosure is not limited thereto but is only limited by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice.

It is to be noticed that the term "including," used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device including means A and B" should not be limited to devices consisting only of components A and B.

The disclosure will now be described by a detailed description of several embodiments. It is clear that other embodiments can be configured according to the knowledge of persons skilled in the art without departing from the true technical teaching of the present disclosure, the claimed disclosure being limited only by the terms of the appended claims.

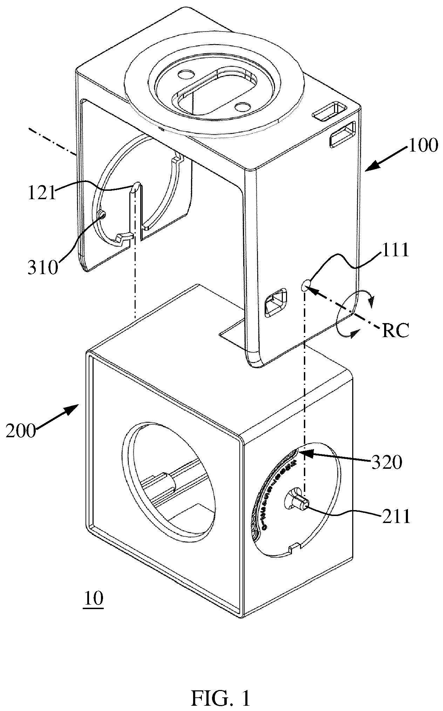

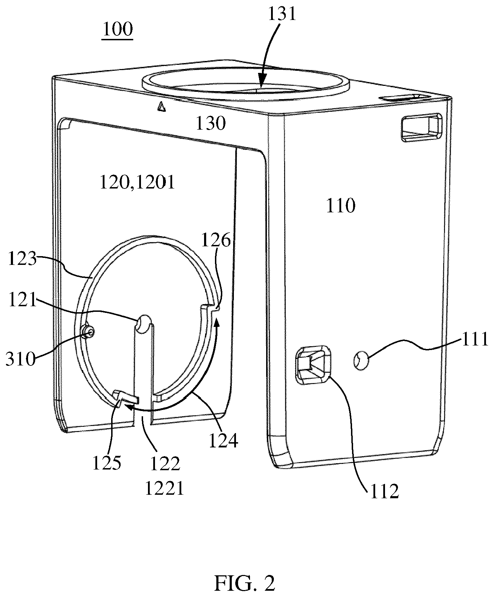

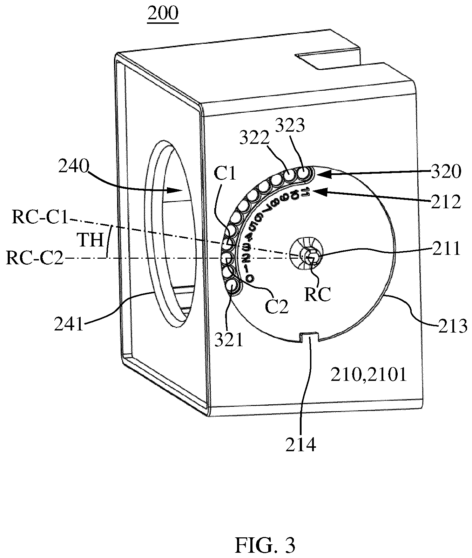

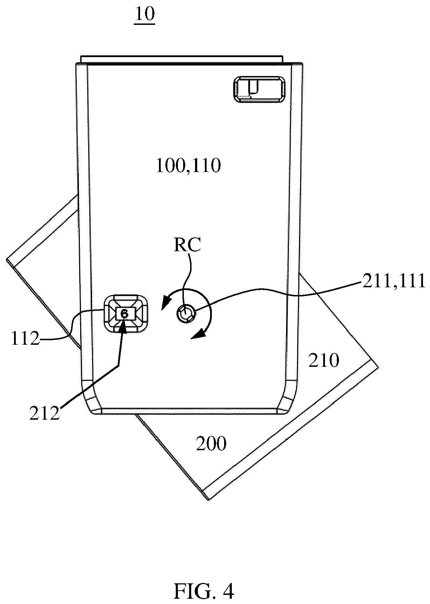

FIG. 1 is a structural exploded view illustrating the first embodiment for the multi-angle adjustable rotation device according to the present invention. FIG. 2 is a schematic diagram illustrating the detailed exemplary structure for the stationary member included in the first embodiment for the multi-angle adjustable rotation device according to the present invention. FIG. 3 is a schematic diagram illustrating the detailed exemplary structure for the rotatable member included in the first embodiment for the multi-angle adjustable rotation device according to the present invention. FIG. 4 is a structural side view illustrating the first embodiment for the multi-angle adjustable rotation device according to the present invention.

Please refer to FIG. 1 to FIG. 4, which depict the structural exploded view illustrating the first embodiment, the schematic diagrams illustrating the detailed exemplary structure for the stationary member included in the first embodiment, and the structural side view illustrating the first embodiment, for the multi-angle adjustable rotation device according to the present invention, respectively.

The multi-angle adjustable rotation device 10 includes two independent components, which are the stationary member 100 and the rotatable member 200. The stationary member 100 has a structural geometry that is preferably a U-shaped structure, and includes a support plate 130, a first side plate 110, and a second side plate 120 opposite to the first side plate 110. The first side plate 110 and the second side plate 120 are configured on both ends of the support plate 130 to form a U-shaped structure. The support plate 130 is used for linking up the first side plate 110 and the second side plate 120 and providing the structural support at the same time. Furthermore, the support plate 130 has a mounting hole 131 provided thereon. Through the mounting hole 131, the stationary member 100 is able to be secured to a designated spot for installing, including but not limited to a bracket, a base, a platform, a ceiling, etc.

The first side plate 110 has a first shaft hole 111 provided thereon, as well as the second side plate 120 has a second shaft hole 121 provided thereon at a position corresponding to the first shaft hole 111. There is an opening further provided on the first side plate 110 to serve as a viewing window 112 and a long and narrow assembling slot 122 further provided on the second side plate 120. An end of the assembling slot 122 communicates with the second shaft hole 121, and another end thereof is an assembling slot opening 1221.

The second side plate 120 has a loop of a rotation ring 123 formed with structure extended toward the inner space and configured on and protruded from an inner surface 1201 that faces toward the inner space. Preferably, the rotation ring 123 has a center that coincides with which the center the second shaft hole 121 has. The rotation ring 123 includes a segment of rotation limiting slot 124 formed by a curved recess that is set back to the center, and a protrusion 310 in dot shape toward the inner space protruded from the rotation ring 123. The first side plate 110 have a rotation ring and a curved rotation limiting slot (both not shown), both of which have the same structures as described above and are provided at positions corresponding to the rotation ring 123 and the rotation limiting slot 124 on the second side plate 120. Preferably, all the structures including the shaft holes, the rotation rings, the rotation limiting slots, and the protrusions formed on both the first side plate 110 and the second side plate 120 are configured symmetrically.

The rotatable member 200 has a structural geometry that is preferably a hollow cube with multiple faces. The cube includes a device space 240 therein adaptive to accommodate any external device, so to provide the external device to be attached to the rotatable member 200. The external device is preferably an electronic device, including but not limited to: a camera lens, an image sensor, a face recognition lens, or other non-electronic devices. The rotatable member 200 further has a device opening 241 configured thereon, so to provide multi-purpose function for different type external devices to adaptively use. For example, when the external device is an electronic device classified as the sensor, the device opening 241 allows its sensing component to be outwardly exposed for sensing the external environment.

The rotatable member 200 includes a first side wall 210 and a second side wall (not shown) opposite to the first side wall 210. The first side wall 210 has a first shaft 211 formed with structure extended toward the outer space and configured on and protruded from an outer surface 2101 thereof facing toward the outer space, as well as the second side wall has a second shaft (not shown) provided at a position corresponding to the first shaft 211. The first side wall 210 has a rotation disc 213 formed by a disk-shaped recess that is set back toward the inner space provided on the outer surface 2101 thereof. Preferably, the rotation disc 213 has a center that coincides with which the center the first shaft 211 has. The rotation disc 213 has an edge formed with a rotation limiting element 214 that is protruded from the edge and extended toward the center of the rotation disc 213, as well as the second side wall has a rotation disc and a rotation limiting element (both not shown), having the same structures as described above, provided at positions corresponding to the rotation disc 213 and the rotation limiting element 214 on the first side wall 210. All the structure including the shafts, the rotation discs, and the rotation limiting elements formed on both the first side wall 210 and the second side wall are all configured symmetrically.

The rotation disc 213 further has a plurality of round recessions 320 configured to be formed in an arc-shaped formation distributed along the edge portion thereof in uniform or non-uniform intervals, or equal or unequal included angle. The included angle is defined as follows. It assumes that each of lines of center, e.g.: RC-C1 or RC-C2, are formed by linking each center points, e.g.: C1 or C2, of each round recessions 320 with the center, a.k.a., the rotation center RC, of the first shaft 211. There are multiple included angles TH formed among each of two neighboring lines of center, for example between RC-C1 and RC-C2, is in a range of from 8° to 11° degrees, for example preferably, 10° degrees, and used for providing different rotating incremental angles to form different rotating angle. Multiple scale indicators 212 are configured in proximity to each of the recessions 320 to indicate the angular position, rotating angle, or rotating step. Each of the scale indicators 212 are preferably consisted of one or two digits of symbols like Arabic numerals, Roman numerals, or uppercase and lowercase English letters. Both the rotatable member 200 configured on the rotation disc 213 and the rotation ring 123 configured on the stationary member 100 have corresponding structures that are complementary to each other in structural geometry, size and position. The rotation disc 213 has an outer diameter that is slightly larger than that of the rotation ring 123.

A suggested way including a few simple steps to assemble the stationary member 100 and the rotatable member 200 is described as follows. In the beginning, the first shaft 211 on the rotatable member 200 is aligned and then inserted into the first shaft hole 111 on the stationary member 100. Next, the second shaft on the rotatable member 200 is aligned to the assembling slot opening 1221 on the assembling slot 122, and then pushed into the second shaft hole 121 by moving along the assembling slot 122. The protrusion 310 on the stationary member 100 is rendered to selectively enter into any one of the round recessions 320, so to engage the protrusion 310 with this recession 320. Once the engagement is established, the assembling of the stationary member 100 and the rotatable member 200 is accomplished, and the multi-angle adjustable rotation device 10 is thus formed. The entire assembling process requires and relies upon only the engagements among components and no additional connecting mechanisms including screws, springs, gears, etc. From a user's point of view, the assembling process involves in manual operation only and without any requirement to use some hardware tools else.

When the stationary member 100 and the rotatable member 200 included in the multi-angle adjustable rotation device 10 are assembled, the rotatable member 200 is rotatably connected to the stationary member 100 through the movable connections between the first shaft 211 and the first shaft hole 111 and between the second shaft and the second shaft hole 121, and the rotatable member 200 rotates around the centers of the first shaft 211 and the second shaft as the rotation center RC relative to the stationary member 100 in two directions.

When the assembling of the stationary member 100 and the rotatable member 200 is accomplished, the rotation ring 123 having larger outer diameter is configured to fit into the disk-shaped recess having smaller outer diameter on the rotation disc 213. When the first shaft 211 or the second shaft are worn or has slightly damaged over time, the rotation mechanism provided by the rotation ring 123 and the rotation disc 213 is able to provide a secondary assurance to render the rotatable member 200 being able to keep rotating around the rotation center RC in two directions relative to the stationary member 100.

The engaged structure formed between the protrusion 310 and the recession 320 works as a retaining mechanism that is capable of retaining the rotating angle for the rotatable member 200 in a specified angle. The multiple round recessions 320 serve as and provides engaging points at different rotating angles for the protrusion 310 included in the rotatable member 200, so to position and retain the rotatable member 200 at different rotating angles within a rotating range, whereby a technical effect of multi-angle rotation adjusting and retaining is achieved. In the present embodiment, each round recessions 320 provide a rotating incremental angle preferably ranged from 8° to 11° degrees, such as, 10 degrees, and serve as different rotating stages. All the round recessions 320 preferably provides a total of rotating scope in a range of from 100° to 120° degrees totally, such as, 110 degrees.

Each scale indicators 212 in proximity to each of the recessions 320 are corresponded to the viewing window 112 on the stationary member 100 in position. A user can visually identify the current rotating angle, angular position, or rotating stage for the rotatable member 200 through the viewing window 112. The scale indicators 212 and the viewing window 112 have physical sizes and structural geometries that are well designed, such that the viewing window 112 has a size capable of displaying one of the scale indicators 212 in proximity to one of the round recessions 320. The viewing window 112 has a structural geometry including but not limited to a square shape or a rectangle shape.

When the multi-angle adjustable rotation device 10 is built up, the rotation limiting element 214 on the rotatable member 200 enters the rotation limiting slot 124 on the stationary member 100. When the rotatable member 200 rotates relative to the stationary member 100, the rotation limiting element 214 that moves in the rotation limiting slot 124 is restrained by stopper structures 125 and 126 configured at two ends of the rotation limiting slot 124, and therefore rotates within a limited rotating range defined by the rotation limiting slot 124. In such way, a maximum rotating range for the rotatable member 200 is confined and limited, to prevent the rotatable member 200 from over-rotating.

A primary rotating range of the rotatable member 200 is initially confined and defined by the positions of the multiple recessions 320. For example, the primary rotating range is restricted between the first recession 321 and the last recession 323. However, when and if the engaged structure formed between the protrusion 310 and the recessions 320 is worn or has slightly damaged over time, the rotation limiting slot 124 and the rotation limiting element 214 can secondarily prevent the rotatable member 200 from rotating out of the maximum rotating range.

The physical size the stationary member 100 has relative to that of the rotatable member 200, as well as the physical size the protrusion 310 has relative to these of the multiple recessions 320, are properly designed. It is well designed to provide the engaged structure capable of producing an appropriate frictional resistance, to render the rotatable member 200 being able to be embedded into the stationary member 100 without loosening. In the meanwhile, when a user turns the rotatable member 200, the rotatable member 200 can be easily driven to move from current rotating stage to another stage. The combination of protrusion 310 and round recessions 320 with appropriate size provide suitable frictional damping, and returns appropriate and clear haptic feedback back to the user.

In an actual use scenario, the stationary member 100 has been installed at the mounting spot and is secured. In order to adjust the rotating angle of the rotatable member 200, the user applies an external force to the rotatable member 200 by hand to cause the rotatable member 200 rotated, and render the rotatable member 200 to slide, for example, from the recession 323 to the neighboring recession 322. The user simply identifies and confirms the current rotating stage on which the rotatable member 200 currently stays by visually viewing the scale indicator 212 appearing in the viewing window 112. During the entire process to adjust the rotating angle of the rotatable member 200, the rotatable member 200 provides clear rotating stages for the user for reference. In one embodiment, the rotatable member 200 preferably rotates relative to the stationary member 100 in a rotating range of from 0° degree to 100°~120° degrees.

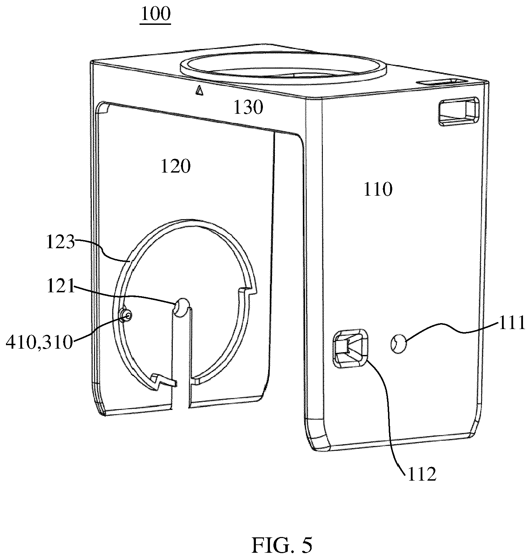

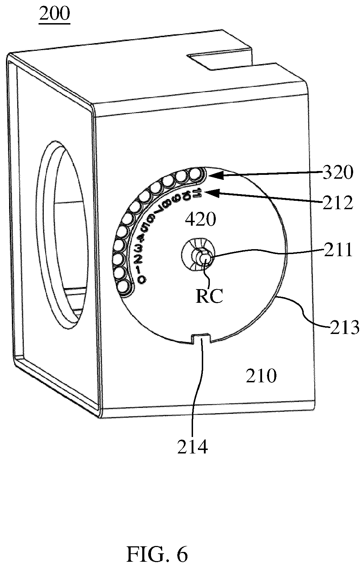

FIG. 5 is a schematic diagram illustrating the detailed exemplary structure for the stationary member included in the second embodiment for the multi-angle adjustable rotation device according to the present invention. FIG. 6 is a schematic diagram illustrating the detailed exemplary structure for the rotatable member included in the second embodiment for the multi-angle adjustable rotation device according to the present invention. The second embodiment according to the present invention is based on the first embodiment described above and includes all features therein. In the present embodiment, the stationary member 100 includes a rotation ring 123 that has a friction portion 410 formed thereon. The friction portion 410 is preferably, for example, a protrusion 310 in dot shape. The rotatable member 200 includes a rotation disc 213 that has a friction surface 420 formed thereon. The friction surface 420 has preferably, for example, a plurality of round recessions 320 configured to be formed in an arc-shaped formation distributed along the edge portion thereof in uniform or non-uniform intervals, or equal or unequal included angle.

In the present embodiment, when the rotatable member 200 rotates around the rotation center RC in two directions relative to the stationary member 100, the rotatable member 200 can be fastened at different rotating angles, preferably through the friction-grips produced among a series of recessions 320 configured on different rotating angles and the protrusion 310 on the stationary member 100. As a result, the rotatable member 200 is fastened at different rotating angles relative to the stationary member 100 through the friction-grips occurring at different angles between the friction portion 410 and the friction surface 420.

There are further embodiments provided as follows.

Embodiment 1: A multi-angle adjustable rotation device includes: a stationary member including a protrusion and a shaft hole; and a rotatable member including a plurality of recessions providing for the protrusion to selectively engage and a shaft configured to insert into the shaft hole, wherein the rotatable member is rotatably joined with the stationary member via the shaft and the shaft hole, rotates around the shaft as a rotation center relative to the stationary member, and is adjustably retained on different rotation angles by an engagement of the protrusion with respect to one of the plurality of recessions.

Embodiment 2: The multi-angle adjustable rotation device as described in Embodiment 1 further includes one of following elements: the stationary member further including one of following elements: a support plate, a first side plate and a second side plate opposite to the first side plate, wherein the first side plate and the second side plate are configured on both ends of the support plate to form a U-shaped structure; the first side plate and the second side plate including a first shaft hole and a second shaft hole respectively; the first side plate further including a viewing window; the second side plate further including an assembling slot, one end of which the assembling slot is connected with the second shaft hole; the first side plate and the second side plate including a rotation ring configured on the inner surfaces facing toward an inner space respectively; the rotation ring including a rotation limiting slot and the protrusion protruded from the rotation ring; both ends of the rotation limiting slot further including stopper structures respectively; and the rotation ring including a first center of circle that coincides with center points of the first shaft hole and the second shaft hole; and the rotatable member further including one of following elements: a first side wall and a second side wall opposite to the first side wall; the first side wall and the second side wall including a first shaft and a second shaft on the outer surfaces facing toward an outer space respectively; the first side wall and the second side wall further including a rotation disc; the rotation disc including a rotation limiting element; the rotation disc including a second center of circle that coincides with center points of the first shaft and the second shaft; the rotation disc further including the plurality of recessions at an edge portion of the rotation disc; the plurality of recessions are configured to distribute in an arc-shaped formation along the edge portion; and a plurality of scale indicators are configured in proximity to each of the plurality of recessions.

Embodiment 3: The multi-angle adjustable rotation device as described in Embodiment 2, the first shaft hole is configured to provide for the first shaft to insert.

Embodiment 4: The multi-angle adjustable rotation device as described in Embodiment 2, the second shaft is configured to insert into the second shaft hole through the assembling slot.

Embodiment 5: The multi-angle adjustable rotation device as described in Embodiment 2, the rotatable member rotates around the first shaft and the second shaft based on the first shaft and the second shaft as the rotation center.

Embodiment 6: The multi-angle adjustable rotation device as described in Embodiment 2, a part of the rotation disc and a part of the rotation ring include structures that compensate with and correspond to each other in shape.

Embodiment 7: The multi-angle adjustable rotation device as described in Embodiment 2, the rotation disc and the rotation ring are fitted with each other in dimension.

Embodiment 8: The multi-angle adjustable rotation device as described in Embodiment 2, the rotation limiting element is configured to enter into the rotation limiting slot, and rotates within a rotation range defined by the stopper structures.

Embodiment 9: The multi-angle adjustable rotation device as described in Embodiment 2, the viewing window is configured to correspond to the plurality of scale indicators in position and show one of the plurality of scale indicators.

Embodiment 10: The multi-angle adjustable rotation device as described in Embodiment 2, further includes an included angle formed between each of a plurality of lines of center formed by vitraully connecting each of a plurality of center points of the plurality of recessions to a center of the shaft.

Embodiment 11: The multi-angle adjustable rotation device as described in Embodiment 10, each of a plurality of the included angles are equal or different.

Embodiment 12: The multi-angle adjustable rotation device as described in Embodiment 10, the included angle is in a range from 8° to 11° degrees.

Embodiment 13: A multi-angle adjustable rotation device includes: a stationary member including a friction portion and a shaft hole; and a rotatable member including a friction surface corresponding to the friction portion and a shaft configured to insert into the shaft hole, wherein the rotatable member is rotatably joined with the stationary member via the shaft and the shaft hole, rotates around the shaft as a rotation center relative to the stationary member, and is adjustably retained on different rotation angles by a friction grip between the friction portion and the friction surface.

Embodiment 14: The multi-angle adjustable rotation device as described in Embodiment 13, the friction portion includes a protrusion, and the friction surface includes a plurality of recessions.

While the disclosure has been described in terms of what are presently considered to be the most practical and preferred embodiments, it is to be understood that the disclosure need not be limited to the disclosed embodiments. On the contrary, it is intended to cover various modifications and similar arrangements included within the spirit and scope of the appended claims, which are to be accorded with the broadest interpretation so as to encompass all such modifications and similar structures. Therefore, the above description and illustration should not be taken as limiting the scope of the present disclosure which is defined by the appended claims.

## Claims

1. A multi-angle adjustable rotation device, comprising:
a stationary member comprising a protrusion and a shaft hole; and
a rotatable member comprising a plurality of recessions providing for the protrusion to selectively engage and a shaft configured to insert into the shaft hole,
wherein the rotatable member is rotatably joined with the stationary member via the shaft and the shaft hole, rotates around the shaft as a rotation center relative to the stationary member, and is adjustably retained on different rotation angles by an engagement of the protrusion with respect to one of the plurality of recessions.

2. The multi-angle adjustable rotation device as claimed in claim 1, further comprising one of following elements:
the stationary member further comprising one of following elements:
a support plate, a first side plate and a second side plate opposite to the first side plate, wherein the first side plate and the second side plate are configured on both ends of the support plate to form a U-shaped structure;
the first side plate and the second side plate comprising a first shaft hole and a second shaft hole respectively;
the first side plate further comprising a viewing window;
the second side plate further comprising an assembling slot, one end of which the assembling slot is connected with the second shaft hole;
the first side plate and the second side plate comprising a rotation ring configured on the inner surfaces facing toward an inner space respectively;
the rotation ring comprising a rotation limiting slot and the protrusion protruded from the rotation ring;
both ends of the rotation limiting slot further comprising stopper structures respectively; and
the rotation ring comprising a first center of circle that coincides with center points of the first shaft hole and the second shaft hole; and
the rotatable member further comprising one of following elements:
a first side wall and a second side wall opposite to the first side wall;
the first side wall and the second side wall comprising a first shaft and a second shaft on the outer surfaces facing toward an outer space respectively;
the first side wall and the second side wall further comprising a rotation disc;
the rotation disc comprising a rotation limiting element;
the rotation disc comprising a second center of circle that coincides with center points of the first shaft and the second shaft;
the rotation disc further comprising the plurality of recessions at an edge portion of the rotation disc;
the plurality of recessions are configured to distribute in an arc-shaped formation along the edge portion; and
a plurality of scale indicators are configured in proximity to each of the plurality of recessions.

3. The multi-angle adjustable rotation device as claimed in claim 2, wherein the first shaft hole is configured to provide for the first shaft to insert.

4. The multi-angle adjustable rotation device as claimed in claim 2, wherein the second shaft is configured to insert into the second shaft hole through the assembling slot.

5. The multi-angle adjustable rotation device as claimed in claim 2, wherein the rotatable member rotates around the first shaft and the second shaft based on the first shaft and the second shaft as the rotation center.

6. The multi-angle adjustable rotation device as claimed in claim 2, wherein a part of the rotation disc and a part of the rotation ring comprise structures that compensate with and correspond to each other in shape.

7. The multi-angle adjustable rotation device as claimed in claim 2, wherein the rotation disc and the rotation ring are fitted with each other in dimension.

8. The multi-angle adjustable rotation device as claimed in claim 2, wherein the rotation limiting element is configured to enter into the rotation limiting slot, and rotates within a rotation range defined by the stopper structures.

9. The multi-angle adjustable rotation device as claimed in claim 2, wherein the viewing window is configured to correspond to the plurality of scale indicators in position and show one of the plurality of scale indicators.

10. The multi-angle adjustable rotation device as claimed in claim 2, further comprising an included angle formed between each of a plurality of lines of center formed by vitraully connecting each of a plurality of center points of the plurality of recessions to a center of the shaft.

11. The multi-angle adjustable rotation device as claimed in claim 10, wherein each of a plurality of the included angles are equal or different.

12. The multi-angle adjustable rotation device as claimed in claim 10, wherein the included angle is in a range from 8° to 11° degrees.

13. A multi-angle adjustable rotation device, comprising:
a stationary member comprising a friction portion and a shaft hole; and
a rotatable member comprising a friction surface corresponding to the friction portion and a shaft configured to insert into the shaft hole,
wherein the rotatable member is rotatably joined with the stationary member via the shaft and the shaft hole, rotates around the shaft as a rotation center relative to the stationary member, and is adjustably retained on different rotation angles by a friction grip between the friction portion and the friction surface.

14. The multi-angle adjustable rotation device as claimed in claim 13, wherein the friction portion comprises a protrusion, and the friction surface comprises a plurality of recessions.
